# EUROPEAN PATENT SPECIFICATION

(11) **EP 2 957 173 B1**
(45) Date of publication and mention of the grant of the patent: **05.07.2017**
(21) Application number: 15169835.4
(22) Date of filing: 29.05.2015
(51) Int. Cl.: A01M 7/00

(54) **IMPROVED SPRAYER FOR TREATING BY MEANS OF PESTICIDES FRUIT TREES AND/OR ROWS OF SHRUBS, PARTICULARLY VINEYARDS**
SPRITZE ZUR BEHANDLUNG VON OBSTBÄUMEN UND/ODER REIHENFRÜCHTEN, INSBESONDERE WEINGÄRTEN, MIT PESTIZIDEN
PULVERISATEUR POUR LA TRAITEMENT AVEC DES PESTICIDES D'ARBRES FRUITIERS ET/OU D'ARBUSTES EN RANGS, EN PARTICULIER DE VIGNOBLES

(30) Priority: 18.06.2014 IT VR20140169
(43) Date of publication of application: 23.12.2015
(73) Proprietor: Marcantoni, Ivano, 37059 Zevio (VR) (IT)
(72) Inventor: Marcantoni, Ivano, 37059 Zevio (VR) (IT)
(74) Representative: Contadin, Giorgio

(56) References cited:
- EP-A1- 2 689 662
- US-A- 5 897 057
- US-A1- 2001 023 554
- US-B1- 6 302 332

## Description

The present invention relates to an improved sprayer (or improved agricultural tunnel-type atomizer or recovery centrifuge device) for treating by means of pesticides (or plant protection products or phyto-based products) of fruit trees and/or shrubs (or climbers) rows, particularly wineyards.

As known, in order to fight the main pests of plants (such as infectious diseases, physiological disorders, parasites and animal pests, weeds), plant protection products (also called agricultural chemicals or pesticides), whether synthetic or natural, are used.

Such plant protection products must be used observing the necessary rules of prudence and safety: they are generally added by spraying, through machines known as sprayers, on the foliage or leaves of trees and/or shrubs, especially if they produce fruit.

Some pesticides may be distributed by irrigation with dampening water, other specific products are used in order to disinfect the ground from pests, still others the authorized use of which is of the endotherapic type, i.e. placed into the plant.

The plant protection products that affect the present invention are those ones which are properly intended for the treatment of trees that produce fruits used by man for feeding (fruit) or for other economic purposes (coffee, chestnut tree, the apple tree, mango, walnut, pear and plum are examples of fruit trees) or for the treatment of climbers and shrubs that produce fruit too, such as grapevine and raspberry.

They are distributed in nebulized way by means of a machine known in the agricultural sector as sprayer (or agricultural atomizer), an apparatus used to perform treatments by means of the aforesaid pesticides on agricultural crops in general and particularly in foliage orchards, such as for example grapevine, cherry, apple, pear, plum and olive tree.

For agricultural cultures in rows (also known in the agricultural sector by the term "*Guyot*"), such as typically the vineyards, straddle sprayers are used, generally of the so-called "tunnel" type, which in a constructive embodiment cover more than two rows on both sides. Basically, the sprayer atomizes, thanks to a fan, the pesticide mixture in water contained into a taking tank and, while advancing along a direction parallel to the row, directs such a mixture on the crop to be treated by means of a tubular conveyor or at least one couple of distribution pendants facing and spaced apart each other by an adjustable distance. In this connection, it should be considered, for instance, prior art document published as US5,897,057 A.

In such a way, the distribution pendants define a movable tunnel receiving, enveloping progressively consecutive traits thereof which intercepts, each row of fruit trees to be treated without damaging its foliage. In aero-convection sprayers, the drops of the compound water/pesticide, pulverized by the nozzles, are directed towards the crop to be treated by means of an air flow generated by the inlet air/fan group.

The sprayer (or agricultural sprayer) can be, mainly, of brought, driven or self-propelled type: in the first case, the brought sprayer is connected with an agricultural tractor by means of three-points linkage and is composed of a taking tank, of variable capacity (for example 200 to 800 liters), a pumping group, an air suction group including a fan with variable diameter.

The driven sprayer is always connected with the agricultural tractor but in this case by means of a tow hook and consists of a carriage structure, on which a taking tank having variable capacity (usually 800 to 2000 liters) is fixed, a pumping group with adequate capacity and an air suction group formed by a fan of variable diameter.

Both the brought sprayers and the driven sprayer can be connected through shaft or universal joint with all the agricultural tractors 15 HP to over 100 HP.

In the self-propelled sprayer, finally, the structure composed by the taking tank, pumping group and air suction group is mounted on a machine, usually provided with four wheels, comprising a motor which beyond to provide for the operation of the sprayer guarantees also the movement of the machine.

The present invention is directed in particular to the straddle sprayers (or atomizers) of the tunnel type, equipped with a single operating arm which, under conditions of use or operation, is disposed cantilevered laterally with respect to the agricultural tractor in order to wrap the row of the orchard, especially a vineyard, to be treated with plant protection products.

There is, indeed, on the market a specific type of sprayers, designed to treat a single row of the orchard at a time as they advance along a direction parallel to the row itself, by means of own motion in case they are self-propelled driving machines or driven by the agricultural tractor on which they are mounted in case they are operating machines: this situation occurs when the orchard (in particular a vineyard) is cultivated on the hills or however on a sloped ground which necessarily involves terracing in order to allow its convenient and easy and safe access.

These straddle sprayers of known type, for obvious reasons of safety in terms of balance and weight having regard to the critical sloping conditions in which they operate, are provided with a single pair of spraying pendants (or diffuser assembly), laterally projecting from the machine body or the agricultural tractor, and so, as they advance along the direction of trip, they are able to wrap only a single row of the orchard to be treated with pesticides.

In particular, the pair of spraying pendants (or diffuser assembly) protrudes towards the valley of the hill, thus being arranged to the right with respect to the machine body or the agricultural tractor that is advancing along the direction of trip side-by-side the row under treatment.

It follows that, at the end of treatment with pesticides in a given row of the orchard - that is, once reached the head which is conventionally established as final of a given row just treated - the operator must negatively perform a pointless return trip, unable to operate on a new row still to be treated, and return to the head which, by convention, is established as initial of the row just treated in order to treat the row immediately subsequent or adjacent, starting from the head of the latter; this except the denied and unrealistic assumption of choosing to start treating a further row starting from its head end, by turning the self-propelled machine or the agricultural tractor once the final head of the row just treated has been reached, having in such a way to inconveniently skip the row immediately adjacent to that one just treated. Such an operative situation generates a series of drawbacks induced constituted, firstly, by the fact that the time and the fuel consumption required to complete the treatment of the entire ground lot dedicated to the orchard are elevated or however somewhat higher than in the optimum situation, conceivable if the rows of the orchard could be treated one after the other, without performing pointless runs with the sprayer but continuing without interruption in a typical zigzag tip, going outward a row and backward the row immediately next to it.

Secondly, in use phase, the straddle sprayers of the known art examined herein involve an physical effort and a risk level for the operator which, although limited, are in any case excessive, also considering the degree of concentration that he must pay while driving the operating machine or the agricultural tractor by reason of the fact that:
- the orchard to be treated is placed in a slope and/or terraced ground;
- in operative conditions the straddle sprayer presents a cantilevered portion (protruding sideways from the operating machine which by construction belongs to or from the agricultural tractor which it is mounted on) which, affecting its centre of gravity, changes the parameters of driving and conduction which the operator must take into account;
- for each treated row of the orchard, the operator must move in reverse, even if pointless, the operating machine or the agricultural tractor itself.

This despite the operator drives the agricultural vehicle from a cabin that ensures conditions of comfort and safety, thanks to the technological developments that have affected in the years the sector of the agricultural appliances.

A last but not least drawback determined by the straddle sprayers of the known art is due to the fact that the pointless return stroke performed by the operator for each row just treated of the orchard, especially vineyard, inevitably increases the risk that the straddle sprayer and/or the operative machine or the agricultural tractor which is associated with accidentally bumps against the foliage and/or the fruits of the orchard, with all the disadvantages that this evidently involves: as such a reverse manoeuvre is being carried out with attention and care by an also skilled operator and by conducting the vehicle at very low speed, it happens sometimes, indeed, that the foliage and/or the fruits of the orchard row just treated suffer harmful accidental bumps that definitely do not impact positively on the crop efficiency. Starting, therefore, from the knowledge of the abovementioned main drawbacks of the prior art, the present invention seeks to fully remedy to them.

In particular, main purpose of the present invention to provide an improved straddle sprayer for treating by means of pesticides fruit trees and/or shrubs rows, particularly vineyards, which allows to treat the rows of the orchard one directly after the other, without performing pointless return strokes but seamless continuing from a given row to the row immediately next to it.

Within this purpose, it is task of the invention to design an improved sprayer for treating by means of pesticides fruit trees and/or shrubs rows, particularly vineyards, which compared to equivalent sprayers of the known type improves the efficiency with which such a treatment is carried out, reducing compared to the prior art the times foreseen therein and the required fuel consumption of the (self-propelled or driven) machine, hectares of crop to be cultivated being equal.

It is another task of the present invention to make available an improved sprayer for treating by means of pesticides fruit trees and/or shrubs rows, particularly vineyards, that compared to the current state of the art reduces physical efforts and looses, although only partially, the tension of the operator while performing the treatment of the orchard with pesticides.

It is a further purpose of the invention to provide an improved sprayer for treating by means of pesticides fruit trees and/or shrubs rows, particularly vineyards, which allows to limit the harmful accidental impacts suffered by the foliage and/or fruits of the orchard with respect to what is allowed with similar known sprayers.

It is a last but not least purpose of the present invention to provide an improved sprayer for treating by means of pesticides fruit trees and/or shrubs rows, particularly vineyards, which, in general, therefore, allows to increase the productivity of the hill round lot or otherwise sloping with respect to the state of the art.

The aforesaid purposes are achieved through an improved straddle sprayer for treating by means of pesticides fruit trees and/or shrubs rows, particularly vineyards, according to claim 1 attached hereto, as hereinafter referred for the sake of exposure brevity.

Other technical and constructive detail features of the improved straddle sprayer for treating by means of pesticides fruit trees and/or shrubs rows, particularly vineyards, are contained in the corresponding dependent claims.

The above-mentioned claims, hereinafter specifically and concretely defined, shall mean as integral part of the present description.

Advantageously, the improved straddle sprayer of the present invention, used specifically for treating by means of pesticides fruit trees and/or shrubs rows, particularly vineyards, allows to treat the orchard rows one directly after the other, without seamless in the sense that they allow to avoid those pointless return strokes which must be carried out at the current state of the art with similar sprayers of known type, after treating a given row in outward.

Unlike the prior art, the improved straddle sprayer of the invention allows, indeed, to treat with pesticides an additional row of orchard, especially a vineyard, starting directly from the head that matches or is aligned (along the direction perpendicular to the development direction of the rows) to the head which by convention is considered final of the previous row just completed to treat.

This thanks to the fact that the articulation means which connect the support frame with the diffuser assembly of a sprayer of the type here considered, provided with a single pair of distribution pendants, includes in an innovative way a mechanical group which develops vertically according a longitudinal axis and is operatively connected through rotation means with third moving means which make it rotating around such a longitudinal axis: in this way, the operating position of the distribution pendants is defined alternately right and left with respect to the running direction of the agricultural machine on the ground in which the orchard is planted and the distribution pendants of the diffuser assembly are placed alternately on the right and on the left of the aforesaid running direction.

Still advantageously, the improved sprayer for treating by means of pesticides fruit trees and/or shrubs rows, particularly vineyards, of the present invention allows to carry out such a treatment in times and with fuel consumptions by the agricultural machine lower than those ones associated with the equivalent sprayers of the prior art, with respect to which the improved sprayer of the invention results therefore and in all evidence more efficient and versatile in terms of use and economy of working, factors that also allow the farmer to amortize in reduced times the eventual higher cost incurred for its purchase.

Equally advantageously, the invention allows to reduce with respect to the known art the physical and mental effort that the operator must still put while driving the agricultural machine, equipped with a sprayer, during execution of the treatment with pesticides of the foliage of orchards formed by trees and/or shrubs, especially vineyards.

In advantageous manner, furthermore, just by reducing the number of passages side-by-side each row of the orchard of the agricultural machine on which it is mounted, namely the pointless return strokes after having treated a given row, the improved straddle sprayer of the invention limits the risk of its accidental impact against the orchard foliage and/or fruits, to the evident advantage of the productivity of the entire ground plot thus cultivated.

Said purposes and advantages, as well as other ones that will emerge hereinafter, will appear to a greater extent from the detailed description which follows, relating to a preferred embodiment of the improved sprayer for treating by means of pesticides fruit trees and/or shrubs rows, particularly vineyards, of the invention, given by indicative and illustrative, but not limitative, way with reference to the accompanying drawings, in which:
- figure 1 is an assonometric view of the improved sprayer for treating by means of pesticides fruit trees and/or shrubs rows, particularly vineyards, in a first operating position and in conditions of application or installation;
- figures 2 and 3 are two different assonometric views of the improved sprayer for treating by means of pesticides fruit trees and/or shrubs rows of figure 1;
- figures 4 and 5 are two different assonometric views of the improved sprayer for treating by means of pesticides fruit trees and/or shrubs rows, particularly vineyards, of figure 1 in a second operating position;
- figure 6 is a first simplified and truncated assonometric view of the improved sprayer at the longitudinal vertical axis of rotation;
- figure 7 is the simplified and truncated view, from another angle, of figure 6 at the constructive assembly which includes the innovative core of the invention (vertical mechanical group, rotation means and third moving means);
- figure 8 is a simplified assonometric view from below of the constructive assembly of figure 7;
- figure 9 is an assonometric view of the stand-alone constructive assembly of figure 7;
- figure 10 is a second simplified and truncated assonometric view of the improved sprayer at the upper part of the articulation means which connect the diffuser assembly with the support frame;
- figure 11 is an assonometric view of a stand-alone constructive assembly of figure 10.

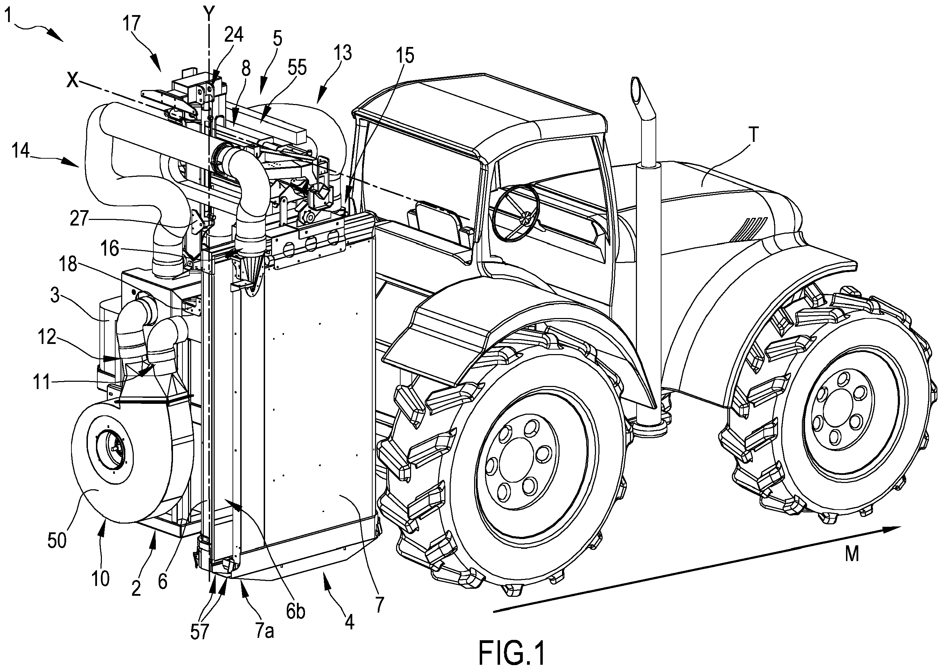

The improved straddle sprayer for treating by means of pesticides fruit trees and/or shrubs rows, particularly vineyards, and arranged on the ground according to rows which are substantially parallel each other, is illustrated in figure 1, where it is as a whole numbered with 1, installed on the rear part of an agricultural machine, typically an agricultural tractor T.

It is pointed out herein that the agricultural tractor, also called agricultural machine, is defined as movable power central and is a vehicle used in agriculture to drive a trailer or to clasp some specific equipment for the agricultural works: it belongs to the family of the self-propelled agricultural machines. In the agricultural mechanics field, the tractor is considered a "driving machine", while the agricultural machines carrying out the works driven by the tractor (such as the plow) or attached to its power intake (such as the improved sprayer of the present invention could be) are called "operating machines".

As it can be observed, the improved sprayer 1 includes:
- a support frame 2 suitable to be coupled (as it preferably but not necessarily takes place, in which case the sprayer of the invention is configured as operating machine) or belonging (in which case the sprayer of the invention is configured as driving machine) to a machine body of an agricultural machine, such as a tractor T visible in figure 1;
- a taking tank 3 coupled with said support frame 2 and suitable to contain a water and plant protection products mixture intended to be sprayed on the foliage of fruit trees and/or shrubs of an orchard;
- a diffuser assembly, as a whole numbered with 4, operatively connected through articulation means, indicated as a whole with 5, with the support frame 2 and composed of a pair of distribution pendants 6, 7 facing each other and close to the taking tank 3, each provided with spraying nozzles, not shown for simplicity and suitable to spray in a nebulized way the water and pesticide mixture on the foliage of trees and/or shrubs: the distribution pendants 6, 7 are arranged in such a way as to take an operating position, not specifically illustrated in the attached figures, in which they are facing from opposite sides each of the rows of the orchard, spaced apart so as to define a movable tunnel in consecutive sections of each of the rows which are progressively received while the agricultural machine T advances on the ground in which the orchard is planted;
- first moving means, generally indicated with 8, suitable to remove the diffuser assembly 4 from the taking tank 3 and position it at each of the rows, although not yet ready for properly performed the treatment;
- second moving means, indicated as a whole with 9, suitable to space apart the each other the distribution pendants 6, 7 of the diffusor assembly 4 so as to define the movable tunnel and position the distribution pendants 6, 7 in the operating position, actually useful to perform properly the treatment;
- ventilation means (generic numeric reference 10), communicating with the taking tank 3 and having two outlets 11, 12, operatively connected with actuation means, not shown, suitable to produce a flow of pressurized air which conveys the water and pesticides mixture to the diffuser assembly 4;
- a pair of distribution pipes 13, 14, connected at a first end 13a, 14a with the respective outlets 11, 12 of the ventilation means 10 and at a second end 13b, 14b with respective inlets 15, 16, each of which are defined in one of the distribution pendants 6, 7 yet introduced.

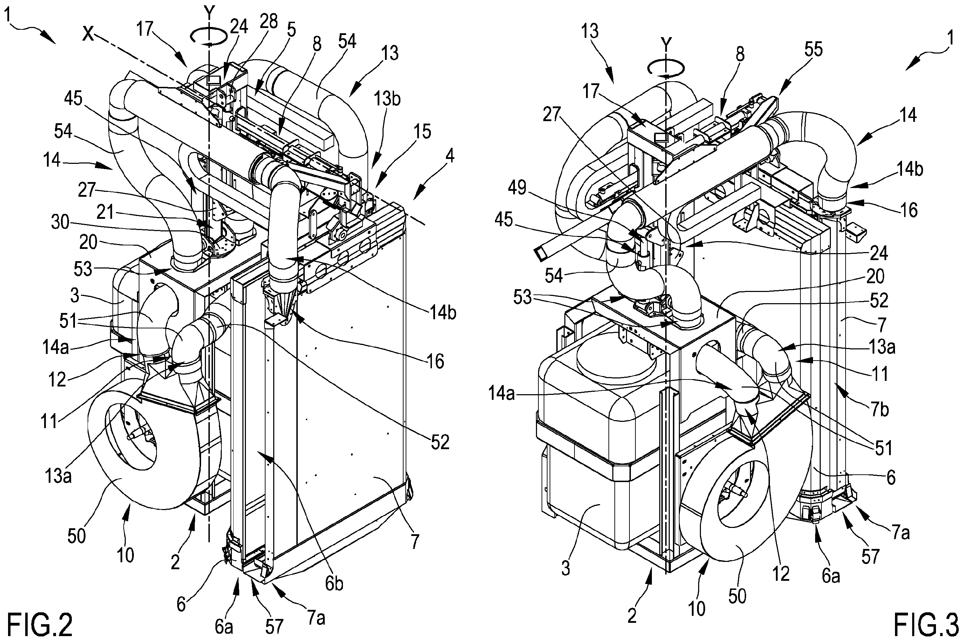

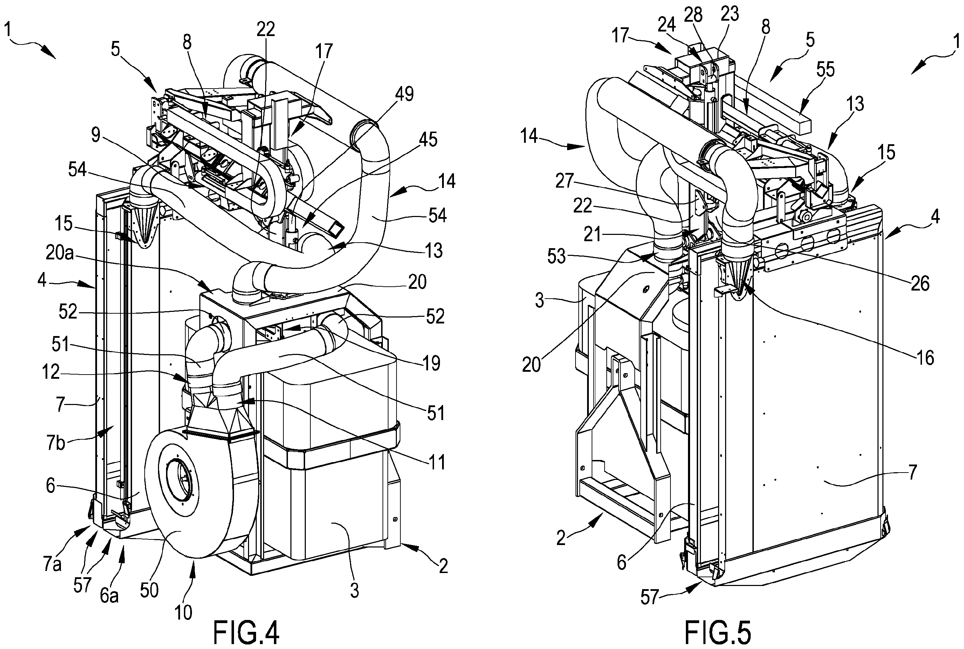

In accordance with the invention, the articulation means 5 include a vertical mechanical group, overall indicated with 17, which develops along a longitudinal axis Y and is operatively connected through rotation means, as a whole numbered with 18, with third moving means, indicated as a whole with 19, which make it rotating around the longitudinal axis Y in such a way that the operating position of the distribution pendants 6, 7 is defined alternately right and left with respect to the running (or trip) direction M of the agricultural machine T on the ground where the orchard is planted and the distribution pendants 6, 7 of the diffuser assembly 4 are placed alternately right and left always with respect to such a running direction M: that can be obtained by observing on one hand figures 2 and 3 and the other hand figures 4 and 5 and by comparing the position assumed by the diffuser assembly 4 with respect to the longitudinal axis Y.

In particular and advantageous way, the vertical mechanical group 17 is arranged directly above the taking tank 3, between which a head portion 20 belonging to the support frame 2 is interposed: such a constructive arrangement makes the improved sprayer 1 of the invention, especially during transport, more compact compared to similar sprayers of the prior art, reducing the overall dimensions thereof till the point of confining it within the agricultural machine T that supports it, with obvious advantages during the trip of any road or during its outbuildings for instance in a barn.

Furthermore, the particular arrangement of the taking tank 3 under the vertical mechanical group 17, and consequently side-by-side the diffusor group 4, beyond to improve its compactness, advantageously allows to move the centre of gravity of the improved sprayer 1 of the invention towards the agricultural machine T, de facto obtaining a better balance of the same with respect to the current state of the art, with consequent increase of the safety conditions for the operator when the improved sprayer 1 performs the treatment of the rows of the orchard, especially if it is considered that it is specifically designed to operate on sloping grounds where notoriously the working conditions are more critical.

For their part, the rotation means 18 are arranged coaxially to the vertical mechanical group 17 and, preferably, are underlying to the head portion 20 of the support frame 2 remaining substantially hidden from view, partially protected but accessible for maintenance, repair, replacement and/or inspection interventions.

In particular, moreover, the third moving means 19 are stably coupled with the support frame 2, also in a position below the head portion 20 of the support frame 2 itself.

Preferably, the vertical mechanical group 17 comprises a reinforced column 21, made for example of metallic material such as steel, formed by two tubular elements 22, 23 telescopically coupled together, the innermost of which cooperates with fourth moving means, overall reported with 24, fixed externally to the reinforced column 21 and suitable to be operated by the actuation means in order to lengthen/shorten until eventually the maximum value allowed the height of the reinforced column 21along the longitudinal axis Y and adjust, accordingly, the height of the diffuser assembly 4 as a function of the feature (or state) of the ground on which the agricultural machine T moves: the state of the ground can be indeed uneven or vary from ground to ground to be cultivated.

In particular, the outer cylinder 25 of the fourth moving means 24 is fixed to the outer wall 22a of the outermost tubular element 22 by means of two shaped brackets 26, 27 facing and spaced apart each other, whereas the stem of force 28 cooperates with the innermost tubular element 23 allowing extension/retraction, with vertical motion respectively upwardly and downwardly, from/in the outer cylinder 25.

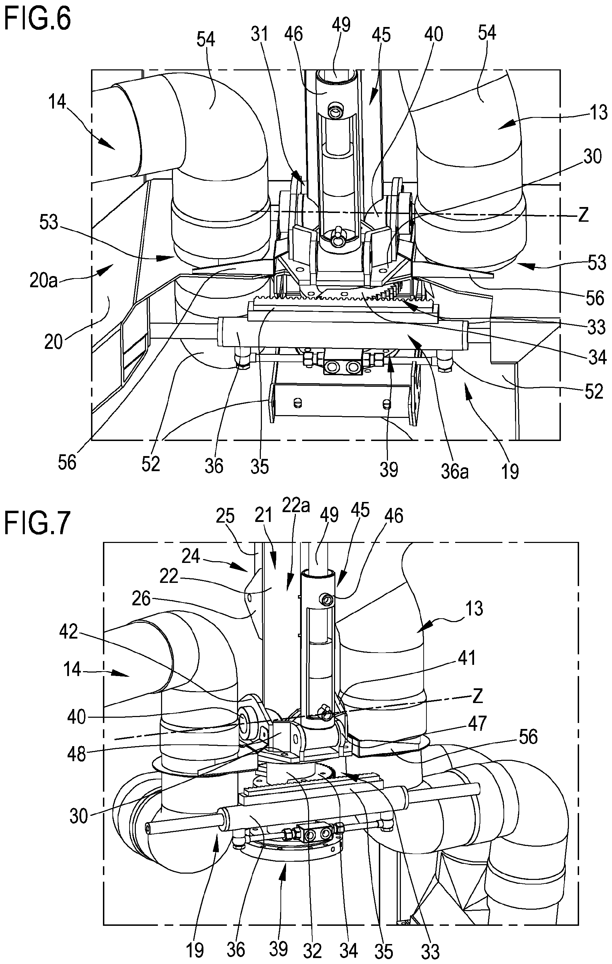

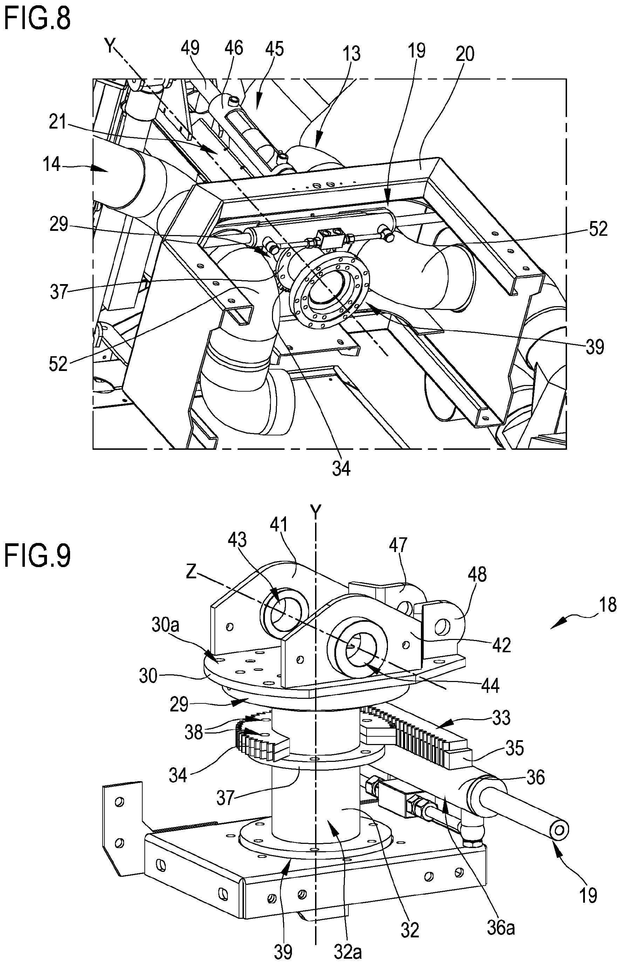

According to the preferred embodiment described herein of the invention, the rotation means 18 comprise, as shown in figure 6:
- a main support and rotation thrust ring 29, integral with a base flange 30 which inferiorly supports through constraint means, as a whole indicated with 31, the vertical mechanical group 17 with respect to which the main thrust ring 29 and the base flange 30 are coaxial;
- a central sleeve 32, better seen in figures 7 and 8, inferiorly integral and coaxial with the main thrust ring 29 and cooperating with the third moving means 19 through a gear, generally indicated with 33.

Figure 9 shows how the gear 33 comprises a toothed wheel 34 (or sprocket or pinion) integral with the outer wall 32a of the central sleeve 32 and a rack 35 (or linear, floor or rod gear), integral with the outer surface 36a of the outer jacket 36 of the third moving means 19 and in which the toothed wheel 34 itself engages: such a mechanism allows, as known to the man skilled in the art, to convert the rotary motion into continuous linear motion or vice versa, as in the specific case.

Still in figure 9 it is shown that the toothed wheel 34 is made integral to the central sleeve 32 through a reinforcement bushing 37 welded to the outer wall 32a of the central sleeve 32 and fastening means, such as screws or bolts in the appropriate number indicated with 38, passing in the thickness of the toothed wheel 34 and of the reinforcement bushing 37 along which they are uniformly distributed.

In a preferred but not binding manner, the rotation means 18 comprise also an auxiliary support and rotation thrust ring 39, well visible in figures 6-9, inferiorly integral and coaxial with the central sleeve 32, suitable to make the rotation means 18 and, in return, the vertical mechanical group 17, structurally more stable, especially during its rotation around the longitudinal axis Y. In substance, the auxiliary support and rotation thrust ring 39, although its presence is not absolutely essential in the preferred constructive embodiment of the rotation means 18, allows a better distribution of the vertical loads that the latter must withstand.

As far as the constraint means 31 firstly introduced are concerned, preferably but not necessarily they comprise a transverse pin 40 which defines a linear axis Z orthogonal to the longitudinal axis Y of the vertical mechanical group 17 and is integral with the vertical mechanical group 17 as well as with a pair of shaped plates 41, 42 opposite each other, perpendicularly protruding from the upper face 30a of the base flange 30 and laterally supporting the transverse pin 40, in such a way that the latter remains suspended and spaced apart from the upper face 30a of the base flange 30 itself.

More in detail, the transverse pin is mainly housed inside the outermost tubular element 22 of the reinforced column 21, also positioning itself passing near peripheral portions into a pair of first through openings coaxial and opposite each other, not visible, and into a pair of second through openings 43, 44, made one per each of said shaped plates 41, 42, coaxial each other and to the first through openings.

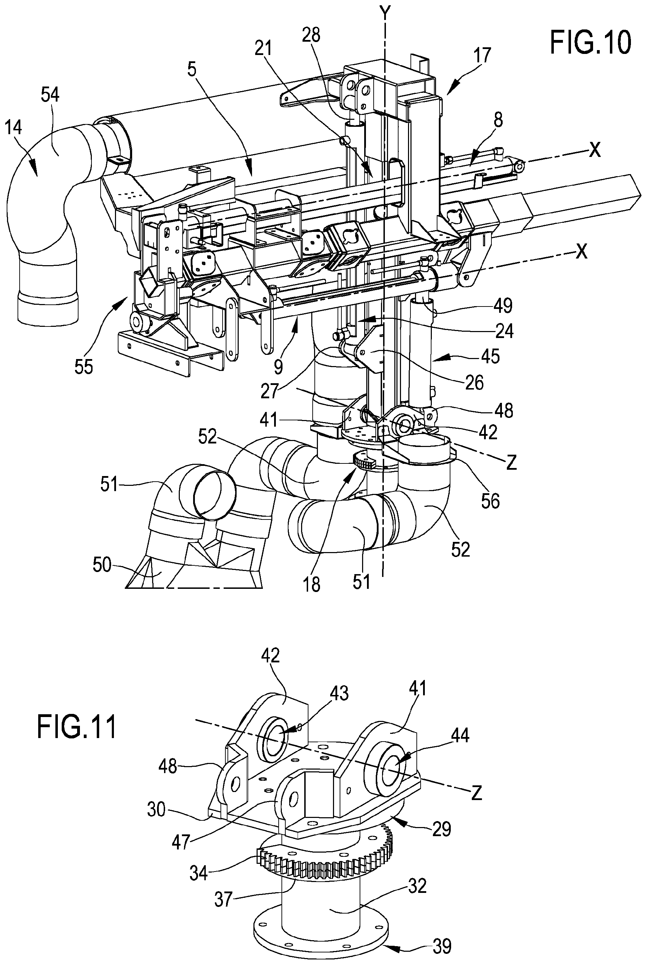

Figures 6-8 and 10 show that, purely by preferred but not exclusive title, the improved straddle sprayer 1 of the invention also includes fifth moving means, overall numbered with 45, operatively connected with the vertical mechanical group 17 and fixed to the base flange 30 that supports the latter, suitable to be operated by the actuation means in such a way as to cause rotation of the articulation means 5 around the linear axis Z of the transverse pin 40 and positive and negative slope of the vertical mechanical group 17 itself and, consequently, of the diffuser assembly 4 with respect to the longitudinal axis Y in order to keep the diffuser assembly 4 disposed in a plane substantially orthogonal to the ground as the slope of the latter varies: in such a way the distribution pendants 6, 7 that in the operating position surround the row of fruit to be treated, are kept as much as possible correctly facing the row itself, oriented according to a plane parallel to it.

Like the fourth moving means 24, also the fifth moving means 45 include an outer cylinder 46 fixed to the outer wall 22a of the outermost tubular element 22 through two terminal appendixes 47, 48 opposite each other, one associated per each of the shaped plates 41, 42 and protruding from the upper face 30a of the base flange 30, whereas the stem of force 49 cooperates with the outermost tubular element 22.

Constructively, the fourth moving means 24 and the fifth moving means 45 are coupled with faces opposite each other of the reinforced column 21of the vertically mechanical group 17.

As already mentioned, each of distribution pendants 6, 7 (one internal and one external) is provided with spraying nozzles and presents a respective inlet 15, 16, so that the ventilation means 10 comprise a centrifugal fan 50 which presents two outlets 11, 12, each of which connected to the respective inlet 15, 16 of one of the distribution pendants 6, 7 through the distribution pipe 13, 14 respectively.

In advantageous but not binding way, each of the distribution pipes 13, 14 is partly independent from the vertical mechanical assembly 17 in such a way that the ventilation means 10, and with them the support frame 2 and the taking tank 3, remain fixed in position even when the third moving means 19 cause rotation of the mechanical unit 17 itself around the longitudinal axis Y.

This is due to the fact that, as the attached figures 1-5 and 10 better help in understanding, the distribution pipes 13, 14 are each composed of:
- a fixed first flexible tubular portion 51, provided with a first end connected with the respective outlet 11, 12 of the ventilation means 10;
- a fixed intermediate tubular fitting 52, arranged consecutively to the first tubular portion 51 and provided with a first end integral with a second end of the first tubular portion 51 and with a second end facing a through hole 53 made in the head portion 20 belonging to the support frame 2 and facing the vertical mechanical group 17;
- a mobile second flexible tubular portion 54, provided with a first end facing the through hole 53 of the head portion 20 and directly communicating with the second end of the intermediate tubular fitting 52 and with a second end connected to the respective inlet 15, 16 of the distribution pendants 6, 7.

It should be noted, also, that the mobile second flexible tubular portion 54 is appropriately supported by a horizontal mechanical group, as a whole numbered with 55, belonging to the articulation means 5 and arranged above the vertical mechanical group 17.

In essence, therefore, only the mobile flexible tubular portion 54 of the distribution pipes 13, 14 moves with the vertical mechanical group 17 when the latter rotates around the longitudinal axis Y by an angle of 180° positioning itself alternately from the operating position at the right (figures 2 and 3) with respect to the running direction M of the agricultural machine T on the ground where the orchard is planted to the operating position and at the left (figures 4 and 5) with respect to such a running direction M of the agricultural machine T.

The second mobile flexible tubular portion 54 of the distribution pipes 13, 14, however, remains always perfectly positioned at the through hole 53 and communicates with the fixed first flexible tubular portion 51, through the interposition of the fixed intermediate tubular fitting 52, when the distribution pendants 6, 7 are positioned either at right or at left with respect to the running (or trip) direction M of the agricultural machine T on the ground. When passing from the operating position at right to the operating position at left with respect to the running direction M of the agricultural machine T on the ground (180° rotation by the vertical mechanical group 17 around the longitudinal axis Y) and vice versa, the second mobile flexible tubular portion 54 of the distribution pipe 13 simply reverses the position with the second mobile flexible tubular portion 54 of the distribution pipe 14, alternately changing the through hole 53 which it faces to and the intermediate tubular fitting 52 which it communicates with.

The end bracket 56 (made preferably in single body with the base flange 30), which the second mobile flexible tubular portion 54 of the distribution pipes 13, 14 is coupled with at the first end, is, indeed, slightly spaced apart by precision from the upper surface 20a of the head portion 20 of the support frame 2 so that, during rotation of the vertical mechanical group 17 around the longitudinal axis Y, the end bracket 56 does not interfere with such an upper surface 20a.

The movement of the upper part (comprising the articulation means - in particular the vertical mechanical group 17 and the horizontal mechanical group 55 - and the second mobile flexible tubular portion 54 of the distribution pipes 13, 14) of the improved sprayer 1 of the invention is, therefore, independent from the lower part (comprising the support frame 2, the taking tank 3 and the first mobile flexible tubular portion 51 of the distribution pipes 13, 14) which, however, remains always and suitably fixed in position: this avoids having to provide in the invention distribution pipes of considerable length or in any case sufficiently high to ensure the ability to position the distribution pendants both at right and at left with respect to the running direction of the agricultural machine on the ground, as well as complicated systems for their handling. These two constructive aspects would result, indeed, in an undue weight and a balance difficult to achieve for the sprayer.

With reference to the first moving means 8 and the second moving means 9 firstly introduced, they are supported by the horizontal mechanical group 55 of the articulation means 5 and operate according to horizontal linear axis X which, by way of preferred example, are mutually distinct and parallel each other: in particular, the first moving means 8 are arranged above the second moving means 9.

It is stressed, in addition, that the moving means described above, numbered in the order with 8, 9, 19, 24 and 45, are of the same type comprising, preferably, hydraulic (or oil-dynamic) linear actuators.

According to an established custom in the agricultural sector in producing this particular type of (motor or operating) machines, the improved sprayer 1 of the invention also includes pumping means, not illustrated for simplicity, fixed to the support frame 2, hydraulically connected through power intake with the supply hydraulic circuit of the agricultural machine T and with the first moving means 8, the second moving means 9 and the third moving means 19: the pumping means have the function of conveying oil under pressure, through a system of diverting valves, to these moving means in order to operate them.

The pumping means are also hydraulically connected with the fourth moving means 24 and the fifth moving means 45 through the aforesaid system of diverting valves.

The pumping means are connected with a hydraulic unit, available to the operator on board of the machine body of the agricultural machine T to adjust the general operation of the improved sprayer 1 and that, therefore, together with the pumping means in this case constitutes the actuation means mentioned above.

It should be noted, also, that each distribution pendants 6, 7 of the diffuser group 4 of the improved straddle sprayer 1 of the invention includes in the lower part 6a, 7a a collection case 57 where the mixture that, following its spraying to the foliage of fruit trees and/or shrubs of the orchard to be treated carried out by the nozzles arranged in the inner face 6b, 7b of each of them (for example that one indicated with 6), it is intercepted by the inner face 6b, 7b of the opposite distribution pendant (for example that one indicated with 7) and, after having been properly filtered, settles downwardly, accumulates.

The product just sprayed and filtered is, thus, recovered by the collection case 57 and from here, by means of an auxiliary suction pump not illustrated in the drawings that follow, conveyed inside the taking tank 3 to be reused in a subsequent step of treatment of the foliage of the fruit trees and/or shrubs of the orchard.

In practice, therefore, assuming that the distribution pendants 6, 7 initially take the operating position of figures 1-3 in which the diffuser assembly 4 is at the right with respect to the running (or trip) direction M of the agricultural machine T on the ground where the orchard (for example a vineyard) to be treated is located, the product - namely the water/pesticides mixture - is sprayed in a nebulize way, thanks to the air under pressure generated by the centrifugal fan 50, against the foliage of the fruit trees and/shrubs of the orchard received into the movable tunnel as follows:
- from the left relative to such a running direction M, by the spraying nozzles of the inner distribution pendant 6, so that the percentage of such a product which is not intercepted by the foliage and passes beyond it is recovered by the opposite distribution pendant 7 and from here conveyed through the auxiliary suction pump to the taking tank 3;
- from the right relative to such a running direction M, by the spraying nozzles of the outer distribution pendant 7, so that also the percentage of such a product which is intercepted by the foliage and passes beyond it is recovered by opposite distribution pendant 6 and from here conveyed through the auxiliary suction pump to the taking tank 3.

Such a situation is kept even when the distribution pendants 6, 7 take the operating position of figures 4 and 5 in which the diffuser assembly 4 is positioned at the left with respect to the running (or trip) direction M of the agricultural machine M on the ground as a result of the rotation of the vertical mechanical group 17 around the longitudinal axis Y, allowed by the rotation means 18 and imparted by the third moving means 19 operated by the actuation means belonging to the agricultural machine T.

The operative advantage brought by the improved sprayer 1 of the invention thus appears immediate, allowing to substantially halve time required to perform the treatment of a given plot of ground cultivated with fruit trees and/or shrubs, the factors involved (capacity labor, agricultural machine power, weather conditions, ground condition and so on) being equal. On the basis of the description just given, it is understood, therefore, that the improved straddle sprayer for treating by means of pesticides fruit trees and/or shrubs rows, particularly vineyards, object of the present invention achieves the purposes and reaches the advantages previously mentioned.

Upon implementation, modifications could be made to the improved sprayer for treating by means of pesticides fruit trees and/or shrubs rows, particularly vineyards, of the invention consisting, for example, in rotation means having a constructive conception different from the preferential one described above and illustrated in the accompanying drawings. Beyond that, other embodiments of the improved straddle sprayer of the invention, not represented, shall exist in which only one of the distribution pendants of the diffuser assembly is provided with spraying nozzles suitable to spray in a nebulized way the water and pesticides mixture on the foliage of trees and/or shrubs. In such an event, accordingly, the ventilation means will be provided with a single outlet, only one of the distribution pendants of the diffuser assembly will be provided with an inlet and the sprayer will comprise a single distribution pipe connecting each other the ventilation means and the diffuser assembly and directing the relevant flow of water/pesticides mixture.

It is, finally, clear that several other changes could be made to the improved sprayer concerned, without departing from the principle of novelty intrinsic in the inventive idea expressed herein, as it is clear that, in the practical implementation of the invention, materials, shapes and sizes of the illustrated details could be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Improved sprayer (1) for treating by means of pesticides fruit trees and/or shrubs rows, comprising:
- a support frame (2) suitable to be coupled or belonging to a machine body of an agricultural machine (T);
- a taking tank (3) coupled with said support frame (2) and suitable to contain a water and pesticides mixture intended to be sprayed on the foliage of fruit trees and/or shrubs of an orchard;
- a diffuser assembly (4) operatively connected through articulation means (5) with said support frame (2) and composed of a pair of distribution pendants (6, 7) facing each other, at least one of which is provided with spraying nozzles suitable to spray in a nebulized way said water and pesticides mixture on said foliage of said trees and/or shrubs, said distribution pendants (6, 7) being suitable to take an operating position in which they are facing from opposite sides each of the rows of said orchard, spaced apart each other in such a way as to define a movable tunnel in which consecutive sections of each of said rows are progressively received while said agricultural machine (T) advances on the ground in which said orchard is planted;
- first moving means (8) suitable to position said diffuser assembly (4) at each of said rows;
- second moving means (9), suitable to space apart each other said distribution pendants (6, 7) of said diffuser assembly (4) so as to position said distribution pendants (6, 7) in said operating position;
- ventilation means (10), communicating with said taking tank (3) and having at least one outlet (11, 12), operatively connected with actuation means and suitable to produce a flow of pressurized air which conveys said water and pesticides mixture to said diffuser assembly (4);
- at least one distribution pipe (13, 14) connected at a first end (13a, 14a) with said outlet (11, 12) of said ventilation means (10) and at a second end (13b, 14b) with an inlet (15, 16) defined in at least one of said distribution pendants (6, 7),
said articulation means (5) including a vertical mechanical group (17) which develops along a longitudinal axis (Y), **characterized in that** said vertical mechanical group (17) is operatively connected through rotation means (18) with third moving means (19) which make it rotating around said longitudinal axis (Y) in such a way that said operating position of said distribution pendants (6, 7) is defined alternately left and right with respect to the running direction (M) of said agricultural machine (T) on said ground in which said orchard is planted and said distribution pendants (6, 7) are placed alternately left and right with respect to said running direction (M).

2. Sprayer (1) according to claim 1), **characterized in that** said vertical mechanical group (17) is arranged directly above said taking tank (3), between which a head portion (20) belonging to said support frame (2) is interposed.

3. Sprayer (1) according to claim 1) or 2), **characterized in that** said rotation means (18) are arranged coaxially to said vertical mechanical group (17).

4. Sprayer (1) according to claim 2), **characterized in that** said rotation means (18) are arranged below said head portion (20) remaining substantially hidden from view, partly protected but accessible for maintenance, repair, replacement and/or inspection interventions.

5. Sprayer (1) according to any of the preceding claims, **characterized in that** said third moving means (19) are firmly coupled with said support frame (2).

6. Sprayer (1) according to any of the preceding claims, **characterized in that** said vertical mechanical group (17) comprises a reinforced column (21), formed by at least two tubular elements (22, 23) telescopically coupled together, the innermost of which cooperates with fourth moving means (24) fixed externally to said reinforced column (21) and suitable to be operated by said actuation means in order to lengthen/shorten until eventually the maximum value allowed the height of said reinforced column (21) along said longitudinal axis (Y) and to adjust, accordingly, the height of said diffuser assembly (4) as a function of the feature or state of the ground on which said agricultural machine (T) moves.

7. Sprayer (1) according to any of the preceding claims, **characterized in that** said rotation means (18) comprise:
- a main support and rotation thrust ring (29), integral with a base flange (30) which inferiorly supports through constraint means (31) said vertical mechanical group (17) with respect to which said main thrust ring (29) and said base flange (30) are coaxial;
- a central sleeve (32), inferiorly integral and coaxial with said main thrust ring (29) and cooperating with said third moving means (19) through a gear (33).

8. Sprayer (1) according to claim 7), **characterized in that** said gear (33) comprises a toothed wheel (34) integral with the outer wall (32a) of said central sleeve (32), and a rack (35), integral with the outer surface (36a) of the outer jacket (36) of said third moving means (19) and in which said toothed wheel (34) engages.

9. Sprayer (1) according to claim 8) **characterized in that** said toothed wheel (34) is made integral with said central sleeve (32) through a reinforcement bushing (37), welded to said outer wall (32a) of said central sleeve (32), and fastening means (38) passing in the thickness of said toothed wheel (34) and said reinforcement bushing (37).

10. Sprayer (1) according to any of the claims 7) to 9), **characterized in that** said rotation means (18) include an auxiliary support and rotation thrust ring (39) inferiorly integral and coaxial with said central sleeve (32), suitable to make said rotation means (18) and said vertical mechanical group (17) structurally more stable.

11. Sprayer (1) to any of the claims 7) to 10), **characterized in that** said constraint means (31) comprise a transverse pin (40) which defines a linear axis (Z) orthogonal to said longitudinal axis (Y) of said vertical mechanical group (17) and is integral with said vertical mechanical group (17) and with a pair of shaped plates (41, 42) opposite each other, perpendicularly protruding from said base flange (30) and laterally supporting said transverse pin (40) in such a manner that said transverse pin (40) remains suspended and spaced apart from the upper face (30a) of said base flange (30).

12. Sprayer (1) according to claim 11), **characterized in that** it comprises fifth moving means (45) operatively connected with said vertical mechanical group (17) and fixed to said base flange (30) that supports said vertical mechanical group (17), suitable to be operated by said actuation means in such a way as to cause rotation of said articulation means (5) around said linear axis (Z) of said transverse pin (40) and positive and negative tilt of said vertical mechanical group (17) and, consequently, of said diffuser assembly (4) with respect to said longitudinal axis (Y) of said vertical mechanical group (17) in order to keep said diffuser assembly (4) substantially orthogonal to said ground when its slope changes.

13. Sprayer (1) according to any of the preceding claims, **characterized in that** each of said distribution pendants (6, 7) is provided with said spraying nozzles and presents said inlet (15, 16), so that said ventilation means (10) comprise a centrifugal fan (50) which presents two outlets (11, 12), each of which is connected with said inlet (15, 16) of each of said distribution pendants (6, 7) through said distribution pipe (13, 14).

14. Sprayer (1) according to any of the preceding claims, **characterized in that** said distribution pipe (13, 14) is partly independent from said vertical mechanical group (17) in such a way that said ventilation means (10) remain fixed in position even when said third moving means (19) cause rotation of said vertical mechanical assembly (17) around said longitudinal axis (Y).

15. Sprayer (1) according to any of the preceding claims, **characterized in that** said distribution pipe (13, 14) is composed of:
- a fixed first flexible tubular portion (51), provided with a first end connected with said outlet (11, 12) of said ventilation means (10);
- a fixed intermediate tubular fitting (52), arranged consecutively to said first tubular portion (51) and provided with a first end integral with a second end of said first tubular portion (51) and with a second end facing a through hole (53) made in a head portion (20) belonging to said support frame (2) and facing said vertical mechanical group (17);
- a mobile second flexible tubular portion, provided with a first end facing said through hole (53) of said head portion (20) and communicating with said second end of said intermediate tubular fitting (52), and with a second end connected with said inlet (15, 16) of one of said distribution pendants (6, 7).

16. Sprayer (1) according to claim 15), **characterized in that** said mobile second flexible tubular portion is coupled with a horizontal mechanical group (55) of said articulation means (5), arranged above said vertical mechanical group (17).

## Patentansprüche

1. Verbesserte Sprühvorrichtung (1) zum Behandeln von Obstbaum- und/oder Strauchreihen mit Pestiziden, umfassend:
- einen Stützrahmen (2), der zum Ankuppeln an einen Maschinenkörper einer landwirtschaftlichen Maschine (T) geeignet ist oder dazu gehört;
- einen Aufnahmetank (3), der an den Stützrahmen (2) gekuppelt ist und zum Enthalten einer Wasser/Pestizid-Mischung geeignet ist, welche auf das Blattwerk von Obstbäumen und/oder Sträuchern einer Obstplantage gesprüht werden soll;
- eine Diffusorbaugruppe (4), die durch Gelenkverbindungsmittel (5) betriebsfähig mit dem Stützrahmen (2) verbunden ist und aus einem Paar Verteilungsgehängen (6, 7) gebildet ist, welche einander gegenüberliegen und von denen zumindest eines mit Sprühdüsen versehen ist, die zum Vernebeln der Wasser/Pestizid-Mischung auf das Blattwerk der Bäume und/oder Sträucher geeignet ist, wobei die Verteilungsgehänge (6, 7) zum Einnehmen einer Betriebsposition geeignet sind, in der sie jeder der Reihen der Obstplantage von gegenüberliegenden Seiten zugekehrt sind, derart voneinander beabstandet, dass ein beweglicher Tunnel definiert ist, in dem aufeinanderfolgende Teilabschnitte von jeder der Reihen fortschreitend aufgenommen werden, während die landwirtschaftliche Maschine (T) auf dem Grund vorrückt, auf dem die Obstplantage gepflanzt ist;
- erste Bewegungsmittel (8), die zum Positionieren der Diffusorbaugruppe (4) an jeder der Reihen geeignet sind;
- zweite Bewegungsmittel (9), die zum Beabstanden der Verteilergehänge (6, 7) der Diffusorbaugruppe (4) geeignet sind, um die Verteilungsgehänge (6, 7) in der Betriebsposition zu positionieren;
- Lüftungsmittel (10), die mit dem Aufnahmetank (3) in Verbindung stehen und zumindest einen Auslass (11, 12) aufweisen, betriebsfähig mit Betätigungsmitteln verbunden und zum Erzeugen eines Druckluftstroms geeignet, der die Wasser/Pestizidmischung zur Diffusorbaugruppe (4) befördert;
- zumindest ein Verteilungsrohr (13, 14), das an einem ersten Ende (13a, 14a) mit dem Auslass (11, 12) der Lüftungsmittel (10) und an einem zweiten Ende (13b, 14b) mit einem Einlass (15, 16) verbunden ist, welcher in zumindest einem der Verteilungsgehänge (6, 7) definiert ist,
wobei die Gelenkverbindungsmittel (5) eine vertikale mechanische Gruppe (17) enthalten, die entlang einer Längsachse (Y) verläuft, **dadurch gekennzeichnet, dass** die vertikale mechanische Gruppe (17) durch Drehmittel (18) betriebsfähig mit dritten Bewegungsmitteln (19) verbunden ist, die sie derart um die Längsachse (Y) drehen lassen, dass die Betriebsposition der Verteilungsgehänge (6, 7) abwechselnd links und rechts bezüglich der Laufrichtung (M) der landwirtschaftlichen Maschine (T) auf dem Grund, auf dem die Obstplantage gepflanzt ist, definiert wird und die Verteilungsgehänge (6, 7) abwechselnd links und rechts bezüglich der Laufrichtung (M) angeordnet werden.

2. Sprühvorrichtung (1) nach Anspruch 1, **dadurch gekennzeichnet, dass** die vertikale mechanische Gruppe (17) direkt über dem Aufnahmetank (3) angeordnet ist, wobei ein Kopfabschnitt (20), der zum Stützrahmen (2) gehört, dazwischen eingeschoben ist.

3. Sprühvorrichtung (1) nach einem der Ansprüche 1 oder 2, **dadurch gekennzeichnet, dass** die Drehmittel (18) koaxial zur vertikalen mechanischen Gruppe (17) angeordnet sind.

4. Sprühvorrichtung (1) nach Anspruch 2, **dadurch gekennzeichnet, dass** die Drehmittel (18) unterhalb des Kopfabschnitts (20), im Wesentlichen außer Sicht verbleibend, teilweise geschützt, jedoch zugänglich für Wartungs-, Reparatur-, Austausch- und/oder Inspektionseingriffe angeordnet sind.

5. Sprühvorrichtung (1) nach einem der vorhergehenden Ansprüche, **dadurch gekennzeichnet, dass** die dritten Bewegungsmittel (19) fest mit dem Stützrahmen (2) verkuppelt sind.

6. Sprühvorrichtung (1) nach einem der vorhergehenden Ansprüche, **dadurch gekennzeichnet, dass** die vertikale mechanische Gruppe (17) eine verstärkte Säule (21) umfasst, die aus zumindest zwei rohrförmigen Elementen (22, 23) ausgebildet ist, die teleskopartig aneinandergekuppelt sind, wobei deren innerstes mit vierten Bewegungsmitteln (24) zusammenwirkt, die extern an der verstärkten Säule (21) befestigt und dazu geeignet sind, durch die Betätigungsmittel betrieben zu werden, um sich bis schließlich zum maximal zulässigen Wert der Höhe der verstärkten Säule (21) entlang der Längsachse (Y) zu verlängern/zu verkürzen und dementsprechend die Höhe der Diffusorbaugruppe (4) je nach der Eigenschaft oder dem Zustand des Grunds, auf dem sich die landwirtschaftliche Maschine (T) bewegt, anzupassen.

7. Sprühvorrichtung (1) nach einem der vorhergehenden Ansprüche, **dadurch gekennzeichnet, dass** die Drehmittel (18) folgendes umfassen:
- einen Hauptstütz- und -drehschubring (29), der mit einem Basisflansch (30) einstückig ist, der unterständig durch Beschränkungsmittel (31) die vertikale mechanische Gruppe (17) stützt, wobei der Hauptschubring (29) und der Basisflansch (30) in Bezug zu dieser koaxial sind;
- eine zentrale Hülse (32), die unterständig einstückig und koaxial mit dem Hauptschubring (29) ist und mit den dritten Bewegungsmitteln (19) durch ein Getriebe (33) zusammenwirkt.

8. Sprühvorrichtung (1) nach Anspruch 7, **dadurch gekennzeichnet, dass** das Getriebe (33) ein Zahnrad (34), das mit der Außenwand (32a) der zentralen Hülse (32) einstückig ist, und eine Zahnstange (35) umfasst, die mit der Außenfläche (36a) der äußeren Hülle (36) der dritten Bewegungsmittel (19) einstückig ist und in die das Zahnrad (34) eingreift.

9. Sprühvorrichtung (1) nach Anspruch 8, **dadurch gekennzeichnet, dass** das Zahnrad (34) einstückig mit der zentralen Hülse (32) durch eine Verstärkungsbuchse (37) hergestellt ist, die an die Außenwand (32a) der zentralen Hülse (32) geschweißt ist, und Befestigungsmittel (38) in der Dicke des Zahnrads (34) und der Verstärkungsbuchse (37) durchlaufen.

10. Sprühvorrichtung (1) nach einem der Ansprüche 7 bis 9, **dadurch gekennzeichnet, dass** die Drehmittel (18) einen zusätzlichen Stütz- und Drehschubring (39) enthalten, der einstückig und koaxial mit der zentralen Hülse (32) ist und dazu imstande ist, die Drehmittel (18) und die vertikale mechanische Gruppe (17) strukturell stabiler zu machen.

11. Sprühvorrichtung (1) nach einem der Ansprüche 7 bis 10, **dadurch gekennzeichnet, dass** die Beschränkungsmittel (31) einen Querstift (40) umfassen, der eine lineare Achse (Z) senkrecht zur Längsachse (Y) der vertikalen mechanischen Gruppe (17) definiert und mit der vertikalen mechanischen Gruppe (17) und mit einem Paar bearbeiteten Platten (41, 42) einstückig ist, die einander gegenüberliegen, lotrecht vom Basisflansch (30) vorstehen und den Querstift (40) derart seitlich stützen, dass der Querstift (40) hängend und beabstandet von der oberen Seitenfläche (30a) des Basisflanschs (30) verbleibt.

12. Sprühvorrichtung (1) nach Anspruch 11, **dadurch gekennzeichnet, dass** sie fünfte Bewegungsmittel (45) umfasst, die betriebsfähig mit der vertikalen mechanischen Gruppe (17) verbunden und an dem Basisflansch (30), der die vertikale mechanische Gruppe (17) stützt, befestigt sind und dazu geeignet sind, derart durch die Betätigungsmittel betrieben zu werden, dass sie eine Drehung der Gelenkverbindungsmittel (5) um die lineare Achse (Z) des Querstifts (Z) und positives und negatives Kippen der vertikalen mechanischen Gruppe (17) und folglich der Diffusorbaugruppe (4) bezüglich der Längsachse (Y) der vertikalen mechanischen Gruppe (17) bewirken, um die Diffusorbaugruppe (4) im Wesentlichen senkrechtstehend zum Grund zu halten, wenn sich dessen Gefälle ändert.

13. Sprühvorrichtung (1) nach einem der vorhergehenden Ansprüche, **dadurch gekennzeichnet, dass** jedes der Verteilungsgehänge (6, 7) mit den Sprühdüsen versehen ist und den Einlass (15, 16) aufweist, sodass die Lüftungsmittel (10) ein Radialgebläse (50) umfassen, das zwei Auslässe (11, 12) aufweist, von denen jeder mit dem Einlass (15, 16) von jedem der Verteilungsgehänge (6, 7) durch das Verteilungsrohr (13, 14) verbunden ist.

14. Sprühvorrichtung (1) nach einem der vorhergehenden Ansprüche, **dadurch gekennzeichnet, dass** das Verteilungsrohr (13, 14) teilweise von der vertikalen mechanischen Gruppe (17) unabhängig ist, sodass die Lüftungsmittel (10) auch dann starr in Position bleiben, wenn die dritten Bewegungsmittel (19) eine Drehung der vertikalen mechanischen Gruppe (17) um die Längsachse (Y) bewirken.

15. Sprühvorrichtung (1) nach einem der vorhergehenden Ansprüche, **dadurch gekennzeichnet, dass** das Verteilungsrohr (13, 14) aus folgendem gebildet ist:
- einem ersten flexiblen rohrförmigen Abschnitt (51), der mit einem ersten Ende versehen ist, das mit dem Auslass (11, 12) der Lüftungsmittel (10) verbunden ist;
- einer starren zwischenliegenden rohrförmigen Armatur (52), die auf den ersten rohrförmigen Abschnitt (51) folgend angeordnet ist und mit einem ersten Ende, das mit einem zweiten Ende des ersten rohrförmigen Abschnitts (51) einstückig ist, und mit einem zweiten Ende versehen ist, das einem Durchgangsloch (53) zugekehrt ist, welches in einem Kopfabschnitt (20) hergestellt ist, der zum Stützrahmen (2) gehört und der vertikalen mechanischen Gruppe (17) zugekehrt ist;
- einem beweglichen zweiten flexiblen rohrförmigen Abschnitt, der mit einem ersten Ende, das dem Durchgangsloch (53) des Kopfabschnitts (20) zugekehrt ist und mit dem zweiten Ende der zwischenliegenden rohrförmigen Armatur (52) in Verbindung steht, und mit einem zweiten Ende versehen ist, das mit dem Einlass (15, 16) von einem der Verteilergehänge (6, 7) verbunden ist.

16. Sprühvorrichtung (1) nach Anspruch 15, **dadurch gekennzeichnet, dass** der bewegliche zweite flexible rohrförmige Abschnitt mit einer horizontalen mechanischen Gruppe (55) der Gelenkverbindungsmittel (5) verkuppelt ist, die über der vertikalen mechanischen Gruppe (17) angeordnet ist.

## Revendications

1. Pulvérisateur amélioré (1) pour le traitement, au moyen de pesticides, d'arbres fruitiers et/ou d'arbustes en rangs, comprenant :
- un châssis de support (2) apte à être couplé ou appartenant à un corps de machine d'une machine agricole (T) ;
- un réservoir de prélèvement (3) couplé audit châssis de support (2) et apte à contenir un mélange d'eau et de pesticides destiné à être pulvérisé sur le feuillage des arbres fruitiers et/ou des arbustes d'un verger ;
- un ensemble diffuseur (4) relié de manière fonctionnelle, par l'intermédiaire de moyens d'articulation (5), audit châssis de support (2) et composé d'une paire d'éléments pendants de distribution (6, 7) se faisant face, dont au moins l'un est muni de buses de pulvérisation aptes à pulvériser de manière nébulisée ledit mélange d'eau et de pesticides sur ledit feuillage desdits arbres et/ou arbustes, lesdits éléments pendants de distribution (6, 7) étant aptes à prendre une position opérationnelle dans laquelle ils font face depuis des côtés opposés chacun des rangs dudit verger, espacés l'un de l'autre de manière à définir un tunnel mobile dans lequel des sections consécutives de chacun desdits rangs sont progressivement reçues alors que ladite machine agricole (T) avance sur le sol dans lequel ledit verger est planté ;
- des premiers moyens de déplacement (8) aptes à positionner ledit ensemble diffuseur (4) au niveau de chacun desdits rangs ;
- des deuxièmes moyens de déplacement (9), aptes à espacer l'un de l'autre lesdits éléments pendants de distribution (6, 7) dudit ensemble diffuseur (4) de façon à positionner lesdits éléments pendants de distribution (6, 7) dans ladite position opérationnelle ;
- des moyens de ventilation (10), en communication avec ledit réservoir de prélèvement (3) et ayant au moins une sortie (11, 12), reliés de manière fonctionnelle à des moyens d'actionnement et aptes à produire un écoulement d'air mis sous pression qui transporte ledit mélange d'eau et de pesticides jusqu'audit ensemble diffuseur (4) ;
- au moins un tuyau de distribution (13, 14) relié, au niveau d'une première extrémité (13a, 14a), à ladite sortie (11, 12) desdits moyens de ventilation (10) et, au niveau d'une seconde extrémité (13b, 14b), à une entrée (15, 16) définie dans au moins un desdits éléments pendants de distribution (6, 7),
lesdits moyens d'articulation (5) comprenant un groupe mécanique vertical (17) qui se développe le long d'un axe longitudinal (Y), **caractérisé par le fait que** ledit groupe mécanique vertical (17) est relié de manière fonctionnelle, par l'intermédiaire de moyens de rotation (18), à des troisièmes moyens de déplacement (19) qui le font tourner autour dudit axe longitudinal (Y) d'une manière telle que ladite position fonctionnelle desdits éléments pendants de distribution (6, 7) est définie alternativement à gauche et à droite par rapport à la direction de marche (M) de ladite machine agricole (T) sur ledit sol dans lequel ledit verger est planté et lesdits éléments pendants de distribution (6, 7) sont placés alternativement à gauche et à droite par rapport à ladite direction de marche (M).

2. Pulvérisateur (1) selon la revendication 1), **caractérisé par le fait que** ledit groupe mécanique vertical (17) est disposé directement au-dessus dudit réservoir de prélèvement (3), entre lequel une partie de tête (20) appartenant audit châssis de support (2) est interposée.

3. Pulvérisateur (1) selon la revendication 1) ou 2), **caractérisé par le fait que** lesdits moyens de rotation (18) sont disposés de manière coaxiale audit groupe mécanique vertical (17).

4. Pulvérisateur (1) selon la revendication 2), **caractérisé par le fait que** lesdits moyens de rotation (18) sont disposés au-dessous de ladite partie de tête (20) restant sensiblement dissimulée à la vue, en partie protégés mais accessibles pour interventions de maintenance, de réparation, de remplacement et/ou d'inspection.

5. Pulvérisateur (1) selon l'une quelconque des revendications précédentes, **caractérisé par le fait que** lesdits troisièmes moyens de déplacement (19) sont couplés fermement audit châssis de support (2).

6. Pulvérisateur (1) selon l'une quelconque des revendications précédentes, **caractérisé par le fait que** ledit groupe mécanique vertical (17) comprend une colonne renforcée (21), formée par au moins deux éléments tubulaires (22, 23) couplés ensemble de manière télescopique, l'élément le plus à l'intérieur coopérant avec des quatrièmes moyens de déplacement (24) fixés extérieurement à ladite colonne renforcée (21) et aptes à être actionnés par lesdits moyens d'actionnement afin d'allonger/raccourcir jusqu'à finalement la valeur maximale autorisée la hauteur de ladite colonne renforcée (21) le long dudit axe longitudinal (Y) et pour ajuster, en conséquence, la hauteur dudit ensemble diffuseur (4) en fonction de la caractéristique ou de l'état du sol sur lequel ladite machine agricole (T) se déplace.

7. Pulvérisateur (1) selon l'une quelconque des revendications précédentes, **caractérisé par le fait que** lesdits moyens de rotation (18) comprennent :
- une contre-butée principale de support et de rotation (29), solidaire d'une bride de base (30) qui supporte par le dessous, par l'intermédiaire de moyens de contrainte (31), ledit groupe mécanique vertical (17) par rapport auquel ladite contre-butée principale (29) et ladite bride de base (30) sont coaxiales ;
- un manchon central (32), solidaire et coaxial par le dessous à ladite contre-butée principale (29) et coopérant avec lesdits troisièmes moyens de déplacement (19) par l'intermédiaire d'un engrenage (33).

8. Pulvérisateur (1) selon la revendication 7), **caractérisé par le fait que** ledit engrenage (33) comprend une roue dentée (34) solidaire de la paroi extérieure (32a) dudit manchon central (32), et une crémaillère (35), solidaire de la surface extérieure (36a) de l'enveloppe extérieure (36) desdits troisièmes moyens de déplacement (19) et avec laquelle ladite roue dentée (34) est en prise.

9. Pulvérisateur (1) selon la revendication 8), **caractérisé par le fait que** ladite roue dentée (34) est rendue solidaire dudit manchon central (32) par l'intermédiaire d'une bague de renforcement (37), soudée à ladite paroi extérieure (32a) dudit manchon central (32), et des moyens de fixation (38) passant dans l'épaisseur de ladite roue dentée (34) et de ladite bague de renforcement (37).

10. Pulvérisateur (1) selon l'une quelconque des revendications 7) à 9), **caractérisé par le fait que** lesdits moyens de rotation (18) comprennent une contre-butée auxiliaire de support et de rotation (39) solidaire et coaxiale par le dessous audit manchon central (32), apte à rendre lesdits moyens de rotation (18) et ledit groupe mécanique vertical (17) structurellement plus stables.

11. Pulvérisateur (1) selon l'une quelconque des revendications 7) à 10), **caractérisé par le fait que** lesdits moyens de contrainte (31) comprennent une broche transversale (40) qui définit un axe linéaire (Z) orthogonal audit axe longitudinal (Y) dudit groupe mécanique vertical (17) et est solidaire dudit groupe mécanique vertical (17) et d'une paire de plaques conformées (41, 42) opposées l'une à l'autre, faisant saillie perpendiculairement à partir de ladite bride de base (30) et supportant latéralement ladite broche transversale (40) d'une manière telle que ladite broche transversale (40) reste suspendue et espacée de la face supérieure (30a) de ladite bride de base (30).

12. Pulvérisateur (1) selon la revendication 11), **caractérisé par le fait qu'**il comprend des cinquièmes moyens de déplacement (45) reliés de manière fonctionnelle audit groupe mécanique vertical (17) et fixés à ladite bride de base (30) qui supporte ledit groupe mécanique vertical (17), aptes à être actionnés par lesdits moyens d'actionnement de manière à entraîner une rotation desdits moyens d'articulation (5) autour dudit axe linéaire (Z) de ladite broche transversale (40) et l'inclinaison positive et négative dudit groupe mécanique vertical (17) et, par conséquent, dudit ensemble diffuseur (4) par rapport audit axe longitudinal (Y) dudit groupe mécanique vertical (17) afin de maintenir ledit ensemble diffuseur (4) sensiblement orthogonal audit sol lorsque sa pente change.

13. Pulvérisateur (1) selon l'une quelconque des revendications précédentes, **caractérisé par le fait que** chacun desdits éléments pendants de distribution (6, 7) est muni desdites buses de pulvérisation et présente ladite entrée (15, 16), de telle sorte que lesdits moyens de ventilation (10) comprennent un ventilateur centrifuge (50) qui présente deux sorties (11, 12), chacune d'elles étant reliée à ladite entrée (15, 16) de chacun desdits éléments pendants de distribution (6, 7) par l'intermédiaire dudit tuyau de distribution (13, 14).

14. Pulvérisateur (1) selon l'une quelconque des revendications précédentes, **caractérisé par le fait que** ledit tuyau de distribution (13, 14) est en partie indépendant dudit groupe mécanique vertical (17) de manière telle que lesdits moyens de ventilation (10) restent fixes en position même lorsque lesdits troisièmes moyens de déplacement (19) amène une rotation dudit ensemble mécanique vertical (17) autour dudit axe longitudinal (Y).

15. Pulvérisateur (1) selon l'une quelconque des revendications précédentes, **caractérisé par le fait que** ledit tuyau de distribution (13, 14) est composé de :
- une première partie tubulaire flexible fixe (51), munie d'une première extrémité reliée à ladite sortie (11, 12) desdits moyens de ventilation (10) ;
- un raccord tubulaire intermédiaire fixe (52), disposé de manière consécutive à ladite première partie tubulaire (51) et muni d'une première extrémité solidaire d'une seconde extrémité de ladite première partie tubulaire (51) et d'une seconde extrémité faisant face à un trou traversant (53) réalisée dans une partie de tête (20) appartenant audit châssis de support (2) et faisant face audit groupe mécanique vertical (17) ;
- une seconde partie tubulaire flexible mobile, munie d'une première extrémité faisant face audit trou traversant (53) de ladite partie de tête (20) et communiquant avec ladite seconde extrémité dudit raccord tubulaire intermédiaire (52), et d'une seconde extrémité reliée à ladite entrée (15, 16) d'un desdits éléments pendants de distribution (6, 7).

16. Pulvérisateur (1) selon la revendication 15), **caractérisé par le fait que** ladite seconde partie tubulaire flexible mobile est couplée à un groupe mécanique horizontal (55) desdits moyens d'articulation (5), disposés au-dessus dudit groupe mécanique vertical (17).
